(19) **Europäisches Patentamt / European Patent Office / Office européen des brevets**

(11) **EP 1 875 689 B1**

(12) **FASCICULE DE BREVET EUROPEEN**

(45) Date de publication et mention de la délivrance du brevet:
**26.11.2014 Bulletin 2014/48**

(21) Numéro de dépôt: **06743732.7**

(22) Date de dépôt: **24.04.2006**

(51) Int Cl.:
**H04L 12/70** *(2013.01)*

(86) Numéro de dépôt international:
**PCT/FR2006/000913**

(87) Numéro de publication internationale:
**WO 2006/114511 (02.11.2006 Gazette 2006/44)**

(54) **PROCEDE DE ROUTAGE, STATION EMETTRICE-RECEPTRICE ET PROGRAMME D'ORDINATEUR POUR LA MISE EN ŒUVRE DU PROCEDE**

LEITWEGLENKVERFAHREN, SENDE-EMPFANGSSTATION UND COMPUTERPROGRAMM ZUM AUSFÜHREN DES VERFAHRENS

ROUTING METHOD, A TRANSMITTING-RECEIVING STATION AND A COMPUTER PROGRAM FOR CARRYING OUT SAID METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.04.2005 FR 0504312**

(43) Date de publication de la demande:
**09.01.2008 Bulletin 2008/02**

(73) Titulaire: **Orange**
**75015 Paris (FR)**

(72) Inventeurs:
• **BACHIR, Abdelmalik**
**F-38100 Grenoble (FR)**
• **BARTHEL, Dominique**
**F-38190 Bernin (FR)**

(74) Mandataire: **Cabinet Plasseraud**
**52, rue de la Victoire**
**75440 Paris Cedex 09 (FR)**

(56) Documents cités:
• XIAOXING GUO: "Broadcasting for network lifetime maximization in wireless sensor networks" SENSOR AND AD HOC COMMUNICATIONS AND NETWORKS, 2004. IEEE SECON 2004. 2004 FIRST ANNUAL IEEE COMMUNICATIONS SOCIETY CONFERENCE ON SANTA CLARA, CA, USA 4-7 OCT. 2004, PISCATAWAY, NJ, USA,IEEE, 4 octobre 2004 (2004-10-04), pages 352-358, XP010759611 ISBN: 0-7803-8796-1
• INTANAGONWIWAT C ET AL: "DIRECTED DIFFUSION FOR WIRELESS SENSOR NETWORKING" IEEE / ACM TRANSACTIONS ON NETWORKING, IEEE INC. NEW YORK, US, vol. 11, no. 1, février 2003 (2003-02), pages 2-16, XP001144288 ISSN: 1063-6692
• BOUKERCHE A ET AL: "ENERGY-AWARE DATA-CENTRIC ROUTING IN MICROSENSOR NETWORKS" PROCEEDINGS 6TH. ACM INTERNATIONAL WORKSHOP ON MODELING, ANALYSIS AND SIMULATION OF WIRELESS AND MOBILE SYSTEMS. ACM MSWIM 2003. SAN DIEGO, CA, SEPT. 19, 2003, ACM INTERNATIONAL WORKSHOP ON MODELING, ANALYSIS AND SIMULATION OF WIRELESS AND MOBILE SYS, 19 septembre 2003 (2003-09-19), pages 42-49, XP001186205 ISBN: 1-58113-766-4

- AL-KARAKI J N ET AL: "ROUTING TECHNIQUES IN WIRELESS SENSOR NETWORKS: A SURVEY" IEEE WIRELESS COMMUNICATIONS, IEEE SERVICE CENTER, PISCATAWAY, NJ, US, vol. 11, no. 6, décembre 2004 (2004-12), pages 6-28, XP001217358 ISSN: 1070-9916

- BROWN S BHANDARE S DOSHI UNIVERSITY OF COLORADO T X ET AL: "The Energy Aware Dynamic Source Routing Protocol <draft-brown-eadsr-00.txt>" IETF STANDARD-WORKING-DRAFT, INTERNET ENGINEERING TASK FORCE, IETF, CH, 23 juin 2003 (2003-06-23), XP015000378 ISSN: 0000-0004

**Description**

La présente invention concerne les techniques de routage utilisées dans les réseaux de télécommunications. Elle s'applique particulièrement, mais non exclusivement, dans les réseaux ad hoc.

Les réseaux ad hoc sont des réseaux de communication dépourvus d'infrastructure fixe. Un certain nombre de stations sans fil sont équipées de moyens d'émission-réception radio et de protocoles adéquats pour former le réseau ad hoc.

Ces stations composant le réseau ad hoc peuvent être sous la forme d'ordinateurs fixes ou portables, d'ordinateurs de poche, de téléphones mobiles, de véhicules, d'appareils électroménagers, etc. Les moyens d'émission-réception peuvent aussi être associés à des objets simples tels que des capteurs ou des actionneurs. Un réseau ad hoc de capteurs permet ainsi d'effectuer de la collecte d'informations par exemple en vue de surveiller ou de contrôler des installations.

Le succès des réseaux ad hoc dépend beaucoup de la durée de vie des stations constituant les noeuds du réseau. L'économie d'énergie est un facteur crucial pour concevoir des réseaux de capteurs à grande durée de vie, notamment parce que les noeuds sont généralement alimentés par des piles dont le remplacement ou le rechargement est généralement coûteux et difficile, voire impossible.

Le routage dans un réseau de télécommunications comporte le processus de recherche d'une route entre un noeud source, émetteur de données, et un noeud de destination, récepteur des données. La route est la succession des noeuds du réseau que les données emprunteront entre le noeud source et le noeud de destination.

Dans les réseaux filaires, il est classique de sélectionner la meilleure route comme celle qui fournira la réponse le plus rapidement. Le routage est alors effectué suivant un algorithme de minimisation de retard.

Dans le contexte des communications sans fil, un tel algorithme de minimisation de retard peut également être utilisé. Son avantage est la faible complexité de traitement des messages de gestion échangés entre les noeuds du réseau pour établir la meilleure route. Ce type d'algorithme réduit également la charge ("overhead") du protocole de routage.

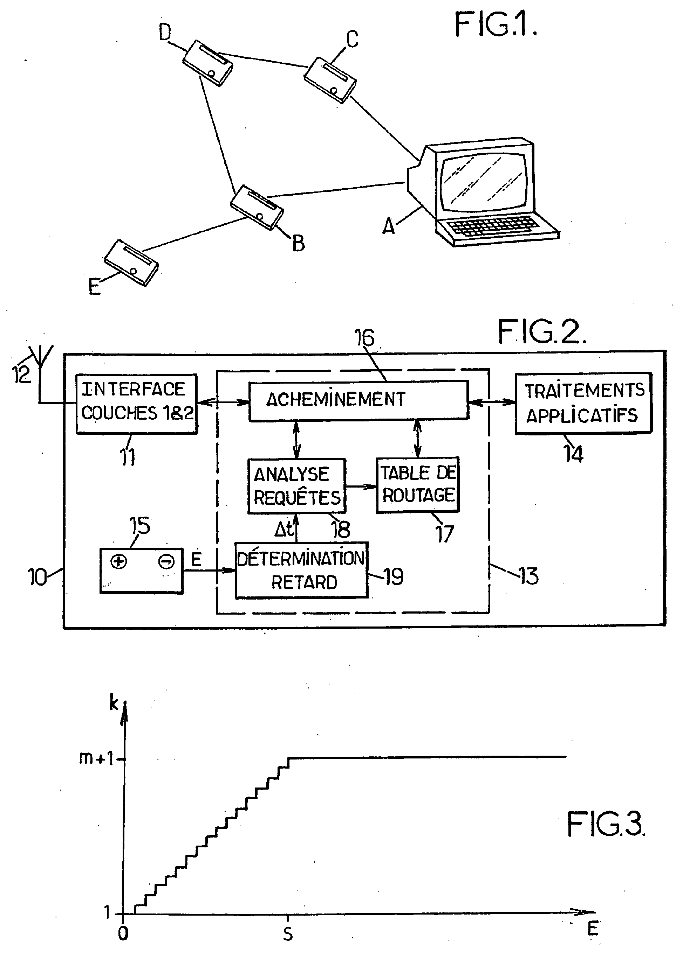

Pour illustrer le fonctionnement d'un algorithme de routage par minimisation de retard, il est fait référence à la figure 1, qui montre schématiquement un réseau ad hoc composé de cinq stations A-E, dont la station A (par exemple un micro-ordinateur) constitue le noeud de destination des données, souvent appelé "sink". On considère ici que le noeud E est la source des données.

Pour initier la collecte des données, le sink A diffuse un message de requête pour rechercher des sources. Chacun des noeuds intermédiaires B et C reçoit cette requête, la traite, puis la rediffuse. Le noeud D reçoit deux fois la requête, une fois en provenance de B, et une fois en provenance de C. Le noeud D ne traite que la première requête qu'il reçoit, et ignore la deuxième. Le noeud D rediffuse la requête reçue en premier. Cette rediffusion est reçue par les noeuds B et C, et chacun d'eux l'ignore étant donné qu'il s'agit d'une requête déjà reçue. Le noeud E reçoit la requête diffusée par B. Comme il est en mesure de fournir les données attendues, il répond à la requête en retournant ces données. Le message de réponse renvoyé par E permet d'identifier la requête. Le noeud intermédiaire B a mémorisé que cette requête provenait du noeud A, de sorte qu'il achemine la réponse vers ce noeud A.

On peut vérifier que dans un tel algorithme de routage à minimisation de retard, les noeuds intermédiaires ne diffusent qu'un seul message et ne traitent qu'un seul message.

Mais un inconvénient des algorithmes de routage connus à minimisation de retard est qu'ils ne permettent pas d'optimiser la durée de bon fonctionnement d'un réseau ad hoc. En effet, le routage est effectué sans tenir compte du niveau d'énergie disponible au niveau des noeuds.

Par exemple, dans le cas de la figure 1, le noeud B sert à acheminer non seulement le trafic venant du noeud E, mais aussi une partie du trafic ayant pour source le noeud D (voire la totalité si la route ABD est systématiquement plus rapide que la route ACD). En conséquence, la consommation électrique du noeud B sera très supérieure à celle du noeud C. Dès que la pile du noeud B fait défaut, le réseau ad hoc n'est plus opérationnel. On voit que sa durée de vie aurait fortement été augmentée si le noeud intermédiaire C avait été préférentiellement utilisé pour acheminer le trafic provenant de D.

Pour pallier ce type d'inconvénient, d'autres familles d'algorithmes de routage ont été conçues pour les réseaux ad hoc. Ces algorithmes choisissent les routes en fonction d'une métrique pouvant tenir compte de l'énergie résiduelle des noeuds intermédiaires. Typiquement, un tel algorithme choisit les routes qui consomment globalement le moins d'énergie quand tous les noeuds ont une réserve d'énergie élevée, et évitent les routes contenant des noeuds dont l'énergie résiduelle est faible, le cas échéant, même au détriment de l'énergie globale. Voir par exemple C-K.Toh, et al., "Performance Evaluation of Battery-Life-Aware Routing Schemes for Wireless Ad Hoc Networks", Proceedings of the IEEE ICC, Helsinki, juin 2001, pages 2824-2829.

Pour illustrer ces algorithmes visant à maximiser la durée de vie du réseau, il est de nouveau fait référence à la figure 1, en supposant maintenant que le noeud D est apte à fournir la réponse attendue par le sink A. A la réception de la requête émise par le sink A, chacun des noeuds intermédiaires B et C la traite en y ajoutant un attribut déterminé en fonction de son énergie résiduelle respective. Cet attribut permet à chaque noeud qui reçoit une requête de connaître la quantité d'énergie résiduelle sur le chemin d'où elle provient. La quantité d'énergie résiduelle sur un chemin correspond ici à l'énergie résiduelle du noeud ayant le niveau d'énergie le plus bas le long de ce chemin. Le noeud source D doit alors traiter chacune des deux requêtes reçues de B et de C afin de décider quelle route prendre en fonction de l'attribut d'énergie résiduelle inclus dans chaque requête reçue.

Ce type d'algorithme a pour inconvénient que chaque noeud intermédiaire doit traiter toutes les requêtes qu'il reçoit pour mettre à jour le champ d'énergie résiduelle dans la requête qu'il va rediffuser. Il en résulte des traitements plus complexes dans les noeuds intermédiaires, pour la réception et le traitement de toutes ces requêtes. Ceci est défavorable à la consommation électrique.

D'autre part, pour recevoir toutes les requêtes dont il ne connaît pas a priori les instants d'arrivée, un noeud doit attendre un certain temps de garde dont le réglage est difficile (un temps trop court fait prendre des décisions prématurées, tandis qu'un temps trop long augmente inutilement la latence du traitement). De plus, l'utilisation d'un attribut supplémentaire dans les requêtes augmente la taille des messages de gestion ("overhead"), ce qui augmente également la consommation énergétique.

Dans l'article "Broadcasting for network lifetime maximization in wireless sensor networks" (Sensor and Ad Hoc Communications and Networks, 2004, 1st annual IEEE Communications Society Conference, Santa Clara, USA, 4-7 oct. 2004, Piscataway, NJ, USA, pages 352-358), X. Guo décrit un protocole pour la diffusion de messages dans des réseaux ad hoc, dans lequel la diffusion est utilisée pour explorer des chemins de routage si la topologie du réseau est inconnue à l'avance. Dans ce protocole, un noeud du réseau détermine s'il relaiera ou non un message en tenant compte d'un temps de latence dépendant de l'énergie résiduelle de ses piles.

Un but de la présente invention est de simplifier les techniques de routage utilisant des métriques de routage pour optimiser les performances d'un réseau de télécommunications, notamment en termes de durée de vie dans le cas de réseaux ad hoc.

L'invention propose ainsi un procédé de routage tel qu'énoncé dans la revendication 1.

La métrique de routage associée à un noeud intermédiaire est convertie en un retard que ce noeud intermédiaire laisse écouler avant de rediffuser la requête. Les noeuds suivants ne traiteront alors que la première requête qu'ils auront reçue.

Cette conversion d'une métrique en un retard permet de filtrer efficacement les requêtes multiples au niveau des noeuds intermédiaires et d'une source. Il leur suffit de ne tenir compte que de la première requête reçue pour prendre en compte implicitement la métrique.

Il en résulte une diminution de la complexité et de la consommation électrique dans les noeuds intermédiaires.

Dans un mode de réalisation préféré du procédé, le retard déterminé en un noeud intermédiaire du réseau est indépendant de la requête à rediffuser. Dans ce cas, le noeud intermédiaire peut éventuellement rediffuser la requête telle qu'il la reçoit. L'overhead en est minimisé puisqu'aucun champ spécifique ne doit alors être prévu pour une information utile au routage dans le message de requête.

Dans l'application de l'invention aux réseaux ad hoc sans fil, il est avantageux que la métrique de routage associée à un noeud intermédiaire dépende de la capacité énergétique résiduelle estimée de ce noeud. On obtient alors le cumul des avantages des algorithmes à minimisation de retard et des algorithmes à maximisation de la durée de vie, sans en subir les inconvénients.

De préférence, le retard est une fonction décroissante convexe de la capacité énergétique résiduelle estimée du noeud.

On observera cependant que d'autres métriques de routage peuvent éventuellement être prises en compte dans le procédé selon l'invention. Par exemple, la métrique de routage associée à un noeud intermédiaire peut dépendre de la bande passante disponible au niveau de ce noeud intermédiaire. L'algorithme de routage tend alors à minimiser le risque de congestion dans le réseau.

Dans un mode de réalisation de l'invention, en réponse à la réception de la requête en un noeud intermédiaire qui n'a pas reçu la même requête auparavant, une adresse du noeud en provenance duquel la requête a été reçue par ledit noeud intermédiaire est mémorisée en relation avec la requête dans une table de routage tenue audit noeud intermédiaire.

Dans un autre mode de réalisation, la requête comporte un champ de routage pour contenir une chaîne d'adresses de noeuds du réseau, et en réponse à la réception de la requête en un noeud intermédiaire qui n'a pas reçu la même requête auparavant, une adresse de ce noeud intermédiaire est ajoutée à la chaîne d'adresses avant de rediffuser la requête à l'étape /c/. La table de routage est alors mémorisée au niveau du noeud source.

Un autre aspect de l'invention se rapporte à une station émettrice-réceptrice telle que définie dans la revendication 8.

L'invention propose aussi un dispositif de routage pour un noeud d'un réseau de télécommunications, tel que défini dans la revendication 9.

Un autre aspect encore de l'invention se rapporte à un programme d'ordinateur à installer dans une station émettrice-réceptrice formant un noeud d'un réseau de télécommunications, tel que défini dans la revendication 10.

D'autres particularités et avantages de la présente invention apparaîtront dans la description ci-après d'exemples de réalisation non limitatifs, en référence aux dessins annexés, dans lesquels :

- la figure 1 est un schéma d'un réseau sans fil ad hoc auquel l'invention est applicable;
- la figure 2 est un schéma synoptique d'un exemple de station émettrice-réceptrice selon l'invention;
- les figures 3 et 4 montrent un exemple de quantification des niveaux d'énergie résiduelle et de calcul de retard de transmission en fonction de cette métrique; et
- la figure 5 est un organigramme des traitements effectués dans un noeud intermédiaire du réseau conformément à un mode de réalisation de l'invention.

La station émettrice-réceptrice 10 illustrée sur la figure 2 est destinée à constituer un noeud d'un réseau ad hoc sans fil.

Elle comporte un module d'interface sans fil 11 relié à son antenne 12, qui assure les traitements de couche physique et de couche de liaison (couches 1 et 2 du modèle OSI) conformes à la technologie sans fil mise en oeuvre dans le réseau sud hoc. Les protocoles de contrôle d'accès au médium (MAC, "médium Access Control") utilisables par le module 1 sont bien connus et peuvent être de type varié (SMAC, TAC, TRAMA, WiseMAC, BMAC, ...). En général, chaque message ou paquet ou trame incorpore une adresse du noeud qui l'a émis et une adresse du ou des noeuds auxquels il est destiné.

Les traitements de couche réseau (couche 3 du modèle OSI) sont assurés par un module 13 de la station 10 tandis que les traitements applicatifs, dépendants du type de noeud, sont assurés par un module 14. Selon le type de station, le module 14 peut coopérer avec un ou plusieurs capteurs et/ou un ou plusieurs actionneurs, non représentés. Il peut aussi assurer des fonctions de supervision ou de commande.

Les différents circuits de la station 10 sont alimentés en énergie électrique depuis une source 15 telle qu'une pile.

Dans la plupart des cas, les traitements numériques des modules 11, 13, 14 sont exécutés par un processeur central de la station 10, sous le contrôle de programmes appropriés. L'un de ces programmes, conformément à l'invention, intervient dans le module 13.

Ce module 13 assure notamment l'acheminement 16 des messages du réseau passant par la station 10, en contrôlant les adresses utilisées par le protocole MAC. La fonction d'acheminement 16 coopère avec une table de routage 17 stockée dans la station. Lorsque la station 10 agit comme noeud intermédiaire pour router un message, la fonction d'acheminement 16 accède à la table de routage 17 pour obtenir l'adresse du noeud suivant auquel le message devra être transmis. Une adresse de diffusion est généralement prévue pour diffuser dans le voisinage de la station 10 des messages sans spécification de destinataire.

Le module 13 comporte en outre une fonction 18 d'analyse de messages de requête diffusés dans le cadre du protocole de routage.

Ces messages de requête sont identifiés comme tels, ce qui permet de les acheminer jusqu'à la fonction d'analyse 18 lorsqu'ils sont reçus. Chaque requête d'informations provenant d'un noeud de destination (sink) du réseau inclut un identifiant qui permet de la distinguer des autres requêtes, et aussi de savoir au niveau de chaque noeud intermédiaire si la même requête a déjà été reçue précédemment.

Conformément à l'invention, si la requête reçue dans le cadre du protocole de routage doit être rediffusée par la station 10, cette rediffusion intervient avec un retard $\Delta t$ déterminé par une unité 19 du module 13 en fonction d'une métrique de routage associée à la station 10.

Dans un mode de réalisation préféré, cette métrique de routage est une fonction de la capacité énergétique résiduelle de la station. Une mesure E du niveau d'énergie restant dans la pile 15 est fournie à l'unité de détermination de 19, et celle-ci en déduit un retard $\Delta t$ utilisé pour la rediffusion des requêtes de routage.

Dans l'exemple représenté sur la figure 3, le niveau énergétique mesuré E est converti sur m niveaux discrets entre E = 0 et E = S, où S est un seuil de protection de la pile correspondant à une fraction définie de son énergie maximale. Dans cet exemple, la métrique k prend ses valeurs entre 1 et m+1, selon:

$$k = \begin{cases} \left\lceil \dfrac{E.m}{S} \right\rceil & \text{si } E \le S \\ \\ m+1 & \text{sinon} \end{cases} \qquad (1)$$

où $\lceil x \rceil$ désigne l'entier égal ou immédiatement supérieur à x.

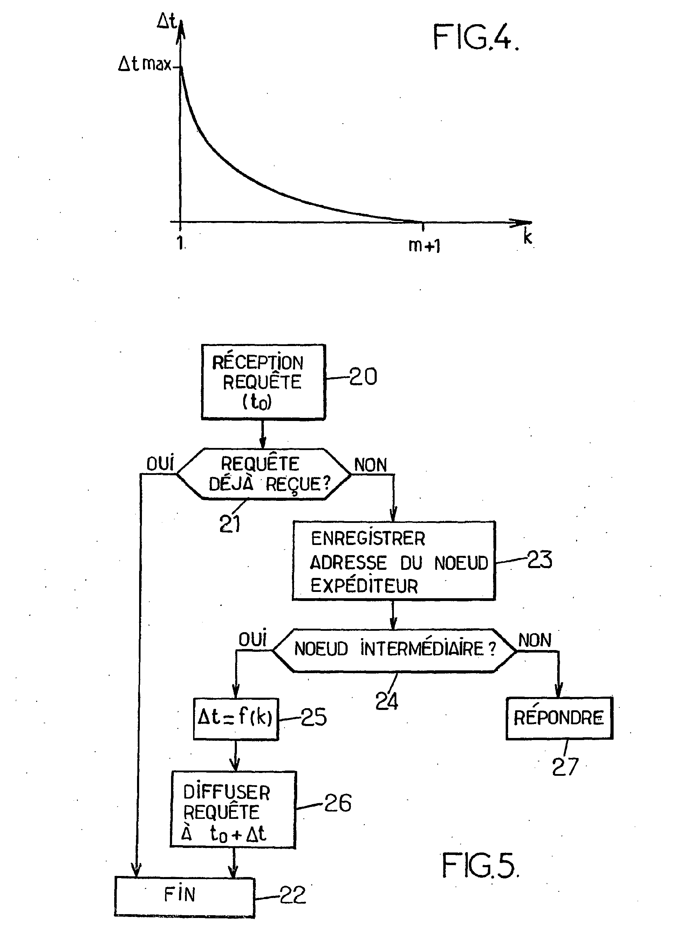

La fonction f qui donne le retard $\Delta t$ à utiliser en fonction du niveau d'énergie E ou de sa valeur quantifiée k est avantageusement une fonction décroissante convexe, comme par exemple une fonction de forme hyperbolique telle que celle représentée sur la figure 4. Cette propriété de convexité assure en première approximation le fait que, lorsqu'au moins un noeud tombe sous le seuil S, la sélection d'une route parmi plusieurs routes possibles s'opère sur la base du maximum, sur ces différentes routes, de l'énergétique résiduelle du noeud le plus faible.

Dans la pratique, l'unité 19 ne procédera généralement pas à un calcul explicite du retard. Des valeurs de retard seront préenregistrées dans une table pour être lues de façon dépendante du niveau d'énergie résiduelle.

La figure 5 présente un organigramme correspondant à la fonction d'analyse des requêtes 18 de la figure 2. Les opérations représentées sont déclenchées suite à la réception 20 d'une requête de routage à un instant $t_0$.

Dans un premier temps, les traitements de réception de la requête ne sont effectués que partiellement afin d'en extraire l'identifiant. Si l'identifiant extrait correspond à celui d'une requête déjà reçue précédemment, c'est-à-dire à un identifiant de requête déjà présent dans la table de routage 17, la procédure de traitement de la requête reçue se termine (étape 22). Les traitements effectués sur une requête déjà reçue auparavant sont donc minimaux.

Si le test 21 montre que la requête reçue n'avait pas été reçue précédemment, les traitements de réception de cette requête sont complétés. L'adresse du noeud depuis lequel cette requête vient d'être émise en est extraite à l'étape 23 pour être enregistrée dans la table de routage 17 en relation avec l'identifiant de la requête. Le noeud expéditeur dont l'adresse est ainsi enregistrée est celui qui précède la station 10 le long de la route empruntée, et qui donc lui fera suite en sens inverse pour l'acheminement de la réponse éventuelle.

Ensuite, le programme détermine si la station 10 est en mesure de répondre à la requête en fournissant les données demandées. Si elle ne l'est pas, elle n'intervient que comme noeud intermédiaire le long de la route et le test 24 est suivi par l'obtention 25 du retard $\Delta t = f(k)$, à la suite de quoi la fonction 18 commande la rediffusion de la requête dans le voisinage de la station 10 à l'instant $t_0+\Delta t$ (étape 26). Cette rediffusion 26 termine les traitements effectués en relation avec la requête reçue à l'étape 20.

Si la station 10 constitue un noeud de destination (non au test 24), alors le module applicatif 14 est sollicité pour qu'il fournisse les données demandées. Le message de réponse ainsi construit (étape 27) est acheminé à l'adresse qui a été enregistrée dans la table de routage 17 à l'étape 23.

Le message de réponse inclut l'identifiant de la requête à laquelle il répond, ceci permet aux noeuds intermédiaires le long de la route de consulter leurs tables de routage respectives afin d'assurer l'acheminement vers les noeuds suivants jusqu'au sink.

Dans une variante de réalisation, les noeuds intermédiaires du réseau ne comportent pas de table de routage. Celle-ci est stockée dans le noeud source. Les messages de requête du protocole de routage peuvent alors avoir un champ de routage destiné à contenir une chaîne d'adresses correspondant respectivement aux noeuds rencontrés le long de la route à employer. La requête est initialement émise par le sink qui place son adresse dans ce champ. Les noeuds intermédiaires conservent provisoirement mémoire des identifiants des requêtes qu'ils ont reçues. A réception d'un message de requête, un noeud intermédiaire examine s'il s'agit d'une requête qu'il a reçue dernièrement. Dans l'affirmative, il ignore la nouvelle réception de la requête. Sinon, il détermine le retard à appliquer, de la manière précédemment décrite, puis il rediffuse la requête avec ce retard. Le noeud intermédiaire ajoute sa propre adresse à la chaîne d'adresses trouvée dans le champ précité, afin de rediffuser une requête complétée. Lorsque la requête atteint un noeud source, celui-ci dispose ainsi des adresses des noeuds successifs de la route que devra suivre la réponse. Cette route peut être mémorisée dans le noeud source. Le message de réponse a un champ incluant la chaîne d'adresses, qui permet aux noeuds intermédiaires d'acheminer ce message de réponse jusqu'au sink.

Dans la description qui précède, la métrique de routage est présentée à titre d'exemple comme une fonction de la capacité énergétique résiduelle de la station. Cependant, le demandeur n'entend pas limiter la portée de sa demande à cet exemple particulier, mais l'étendre à tout type de métrique de routage.

**Revendications**

**1.** Procédé de routage dans un réseau comportant un ensemble de noeuds de communication (A-E) ayant chacun un dispositif de routage selon la revendication 9, pour établir une route d'au moins un noeud source vers un noeud de destination, le procédé comprenant les étapes suivantes:

/a/ diffuser une requête à partir du noeud de destination (A);
/b/ en réponse à la réception de la requête en un noeud intermédiaire, examiner si la même requête a été reçue auparavant par ledit noeud intermédiaire;
/c/ à condition que la même requête n'ait pas été reçue auparavant par ledit noeud intermédiaire, rediffuser systématiquement la requête depuis ledit noeud intermédiaire, avec un retard ($\Delta t$) déterminé en fonction d'une métrique de routage associée audit noeud intermédiaire; et

/d/ répéter les étapes /b/ et /c/ jusqu'à atteindre au moins un noeud source.

2. Procédé selon la revendication 1, dans lequel le retard ($\Delta t$) déterminé en un noeud intermédiaire est indépendant de la requête à rediffuser.

3. Procédé selon la revendication 1 ou 2, dans lequel la métrique de routage associée à un noeud intermédiaire dépend d'une capacité énergétique résiduelle estimée dudit noeud intermédiaire.

4. Procédé selon la revendication 3, dans lequel le retard ($\Delta t$) est une fonction décroissante convexe de la capacité énergétique résiduelle estimée.

5. Procédé selon l'une quelconque des revendications précédentes, dans lequel la métrique de routage associée à un noeud intermédiaire dépend d'une bande passante disponible audit noeud intermédiaire.

6. Procédé selon l'une quelconque des revendications précédentes, dans lequel, en réponse à la réception de la requête en un noeud intermédiaire qui n'a pas reçu la même requête auparavant, une adresse du noeud en provenance duquel la requête a été reçue par ledit noeud intermédiaire est mémorisée en relation avec la requête dans une table de routage (17) tenue audit noeud intermédiaire.

7. Procédé selon l'une quelconque des revendications 1 à 6, dans lequel la requête comporte un champ de routage pour contenir une chaîne d'adresses de noeuds du réseau, et dans lequel, en réponse à la réception de la requête en un noeud intermédiaire qui n'a pas reçu la même requête auparavant, une adresse dudit noeud intermédiaire est ajoutée à la chaîne d'adresses dudit champ avant de rediffuser la requête à l'étape /c/.

8. Station émettrice-réceptrice pour former un noeud d'un réseau de télécommunications, la station (10) comprenant des moyens (11) de réception d'une requête provenant d'un autre noeud du réseau, des moyens (19) de détermination d'un retard ($\Delta t$) en fonction d'une métrique de routage associée à la station, et des moyens (16, 18) pour rediffuser systématiquement la requête avec ledit retard sur le réseau à condition que la même requête n'ait pas été reçue auparavant.

9. Dispositif de routage pour un noeud d'un réseau de télécommunications, comprenant des moyens (19) de détermination d'un retard ($\Delta t$) en fonction d'une métrique de routage associée au noeud, et des moyens (18) pour commander systématiquement la rediffusion sur le réseau, avec ledit retard, d'une requête reçue d'un autre noeud du réseau, à condition que la même requête n'ait pas été reçue auparavant.

10. Programme d'ordinateur à installer dans une station émettrice-réceptrice (10) formant un noeud d'un réseau de télécommunications, pour exécution par une unité de traitement de ladite station, le programme comprenant des instructions pour effectuer les traitements suivants lors d'une exécution du programme par ladite unité de traitement:

   - à réception par la station d'une requête provenant d'un autre noeud du réseau, examiner si la même requête a été reçue auparavant par la station;
   - obtenir un retard ($\Delta t$) déterminé en fonction d'une métrique de routage associée à la station; et
   - si elle n'a pas été reçue auparavant par la station, commander systématiquement une rediffusion de la requête sur le réseau avec ledit retard.

**Patentansprüche**

1. Leitweglenkverfahren in einem Netzwerk, umfassend eine Gesamtheit von Kommunikationsknoten (A-E), die jeweils eine Leitweglenkvorrichtung nach Anspruch 9 umfassen, um einen Leitweg von mindestens einem Ausgangsknoten zu einem Bestimmungsknoten zu erstellen, wobei das Verfahren die folgenden Schritte umfasst:

   a) Verbreiten einer Anfrage vom Bestimmungsknoten (A) ;
   b) als Antwort auf den Erhalt der Anfrage an einem Zwischenknoten Prüfen, ob dieselbe Anfrage vorher von dem Zwischenknoten erhalten wurde;
   c) sofern dieselbe Anfrage nicht vorher von dem Zwischenknoten erhalten wurde, systematisches Wiederverbreiten der Anfrage vom Zwischenknoten mit einer Verzögerung ($\Delta t$), die in Abhängigkeit von einer Leitwegmetrik in Verbindung mit dem Zwischenknoten bestimmt wird; und

d) Wiederholen der Schritte b) und c), bis mindestens ein Ausgangsknoten erreicht ist.

2. Verfahren nach Anspruch 1, bei dem die an einem Zwischenknoten, bestimmte Verzögerung (∆t) von der wieder-zuverbreitenden Anfrage unabhängig ist.

3. Verfahren nach Anspruch 1 oder 2, bei dem die Leitwegmetrik in Verbindung mit einem Zwischenkonten von einer geschätzten Restenergiekapazität des Zwischenknotens abhängt.

4. Verfahren nach Anspruch 3, bei dem die Verzögerung (∆t) eine abnehmende konvexe Funktion der geschätzten Restenergiekapazität ist.

5. Verfahren nach einem der vorhergehenden Ansprüche, bei dem die Leitwegmetrik in Verbindung mit einem Zwischenknoten von einer am Zwischenknoten verfügbaren Bandbreite abhängt.

6. Verfahren nach einem der vorhergehenden Ansprüche, bei dem als Antwort auf den Erhalt der Anfrage an einem Zwischenknoten, der dieselbe Anfrage nicht vorher erhalten hat, eine Adresse des Knotens, von dem aus die Anfrage von dem Zwischenknoten erhalten wurde, in Verbindung mit der Anfrage in einer Leitwegtabelle (17), die am Zwischenknoten vorhanden ist, gespeichert wird.

7. Verfahren nach einem der Ansprüche 1 bis 6, bei dem die Anfrage ein Leitwegfeld umfasst, um eine Kette von Adressen von Knoten des Netzwerks zu enthalten, und bei dem als Antwort auf den Erhalt der Anfrage an einem Zwischenknoten, der dieselbe Anfrage nicht vorher erhalten hat, eine Adresse des Zwischenknotens zu der Adressenkette des Feldes hinzugefügt wird, bevor die Anfrage in Schritt c) wiederverbreitet wird.

8. Sende-Empfangs-Station zur Bildung eines Knotens eines Telekommunikationsnetzwerks, wobei die Station (10) Mittel (11) für den Empfang einer von einem anderen Knoten des Netzwerks kommenden Anfrage, Mittel (19) zur Bestimmung einer Verzögerung (∆t) in Abhängigkeit von einer Leitwegmetrik in Verbindung mit der Station und Mittel (16, 18) zur systematischen Wiederverbreitung der Anfrage mit der Verzögerung in dem Netzwerk umfasst, sofern dieselbe Anfrage nicht vorher erhalten wurde.

9. Leitweglenkvorrichtung für einen Knoten eines Telekommunikationsnetzwerks, umfassend Mittel (19) zur Bestimmung einer Verzögerung (∆t) in Abhängigkeit von einer Leitwegmetrik in Verbindung mit dem Knoten, und Mittel (18) zur systematischen Steuerung der Wiederverbreitung einer von einem anderen Knoten des Netzwerks erhaltenen Anfrage in dem Netzwerk mit der Verzögerung, sofern dieselbe Anfrage nicht vorher erhalten wurde.

10. Computerprogramm, das in einer Sende-Empfangs-Station (10), die einen Knoten eines Telekommunikationsnetzwerks bildet, zu installieren ist, zur Ausführung durch eine Bearbeitungseinheit der Station, wobei das Programm Befehle umfasst, um die folgenden Bearbeitungen bei einer Ausführung des Programms durch die Bearbeitungseinheit durchzuführen:

- bei Empfang einer Anfrage von einem anderen Knoten des Netzwerks durch die Station Prüfen, ob dieselbe Anfrage vorher von der Station erhalten wurde;
- Erhalt einer Verzögerung (ast), die in Abhängigkeit von einer Leitwegmetrik in Verbindung mit der Station bestimmt wird; und
- wenn sie nicht vorher von der Station empfangen wurde, systematische Steuerung einer Wiederverbreitung der Anfrage in dem Netzwerk mit der Verzögerung.

**Claims**

1. Method of routing in a network comprising a set of communication nodes (A-E) each having a routing device according to Claim 9, for establishing a route from at least one source node to a destination node, the method comprising the following steps:

/a/ broadcast a request from the destination node (A) ;
/b/ in response to the receipt of the request at an intermediate node, examine whether the same request has been received previously by the said intermediate node;
/c/ on condition that the same request has not been received previously by the said intermediate node, systematically rebroadcast the request from the said intermediate node, with a delay ($\Delta$t) determined as a function of a routing metric associated with the said intermediate node; and

/d/ repeat steps /b/ and /c/ until at least one source node is reached.

2.  Method according to Claim 1, in which the delay ($\Delta$t) determined at an intermediate node is independent of the request to be rebroadcast.

3.  Method according to Claim 1 or 2, in which the routing metric associated with an intermediate node depends on an estimated residual energy capacity of the said intermediate node.

4.  Method according to Claim 3, in which the delay ($\Delta$t) is a convex decreasing function of the estimated residual energy capacity.

5.  Method according to any one of the preceding claims, in which the routing metric associated with an intermediate node depends on a passband available to the said intermediate node.

6.  Method according to any one of the preceding claims, in which, in response to the receipt of the request at an intermediate node which has not received the same request previously, an address of the node from which the request has been received by the said intermediate node is stored in conjunction with the request in a routing table (17) held at the said intermediate node.

7.  Method according to any one of Claims 1 to 6, in which the request comprises a routing field for containing a string of addresses of nodes of the network, and in which, in response to the receipt of the request at an intermediate node which has not received the same request previously, an address of the said intermediate node is added to the string of addresses of the said field before rebroadcasting the request in step /c/.

8.  Transmitting-receiving station for forming a node of a telecommunications network, the station (10) comprising means (11) for receiving a request originating from another node of the network, means (19) for determining a delay ($\Delta$t) as a function of a routing metric associated with the station, and means (16, 18) for systematically rebroadcasting the request with the said delay over the network on condition that the same request has not been received previously.

9.  Routing device for a node of a telecommunications network, comprising means (19) for determining a delay ($\Delta$t) as a function of a routing metric associated with the node, and means (18) for systematically commanding the rebroadcasting over the network, with the said delay, of a request received from another node of the network, on condition that the same request has not been received previously.

10. Computer program to be installed in a transmitting-receiving station (10) forming a node of a telecommunications network, for execution by a processing unit of the said station, the program comprising instructions for performing the following processings during an execution of the program by the said processing unit:

    - on receipt by the station of a request originating from another node of the network, examine whether the same request has been received previously by the station;
    - obtain a delay ($\Delta$t) determined as a function of a routing metric associated with the station; and
    - if it has not been received previously by the station, systematically command a rebroadcasting of the request over the network with the said delay.

# FIG.1.

D    C

A    B

E

# FIG.2.

16

12

| INTERFACE COUCHES 1&2 | ACHEMINEMENT | TRAITEMENTS APPLICATIFS |

11    14

ANALYSE REQUÊTES    TABLE DE ROUTAGE

15    18    17

$\Delta t$

10    ⊕  ⊖  E    DÉTERMINATION RETARD    19    13

k

m+1

1

0    S    E

# FIG.3.

FIG.4.

$\Delta t$

$\Delta t\,max$

1            m+1     k

RÉCEPTION
REQUÊTE
$(t_0)$  —20

OUI     REQUÊTE
DÉJÀ REÇUE?    NON

21

ENREGISTRER
ADRESSE DU NOEUD  —23
EXPÉDITEUR

OUI     NOEUD INTERMÉDIAIRE ?    NON

24

$\Delta t = f(k)$ —25

RÉPONDRE

27

DIFFUSER
REQUÊTE  —26
À   $t_0 + \Delta t$

FIG.5.

FIN  —22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C-K.TOH et al.** Performance Evaluation of Battery-Life-Aware Routing Schemes for Wireless Ad Hoc Networks. *Proceedings of the IEEE ICC, Helsinki,* Juin 2001, 2824-2829

- **SENSOR ; AD HOC.** Communications and Networks, 2004. IEEE Communications Society Conference, 04 Octobre 2004, 352-358